(19) **Europäisches Patentamt**

**European Patent Office**

**Office européen des brevets**

(11) Veröffentlichungsnummer: **0 135 101 B1**

(12) **EUROPÄISCHE PATENTSCHRIFT**

(45) Veröffentlichungstag der Patentschrift: **27.06.90**

(51) Int. Cl.⁵: **G 01 N 21/64**

(21) Anmeldenummer: **84109282.8**

(22) Anmeldetag: **04.08.84**

(54) **Fluorimeter.**

(30) Priorität: **12.08.83 DE 3329257**

(43) Veröffentlichungstag der Anmeldung:
**27.03.85 Patentblatt 85/13**

(45) Bekanntmachung des Hinweises auf die
Patenterteilung:
**27.06.90 Patentblatt 90/26**

(84) Benannte Vertragsstaaten:
**AT CH DE FR GB IT LI LU NL SE**

(56) Entgegenhaltungen:
**DD-A- 106 086**
**DE-A-2 416 997**
**DE-A-2 948 904**
**DE-A-3 346 024**
**US-A-3 725 658**

(73) Patentinhaber: **Max-Planck-Gesellschaft zur Förderung der Wissenschaften e.V.**
**Bunsenstrasse 10**
**D-3400 Göttingen (DE)**

(72) Erfinder: **Opitz, Norbert, Dr. Dipl.-Phys.**
**Villigsterstrasse 6**
**D-5840 Schwerte (DE)**
Erfinder: **Lübbers, Dietrich Werner, Prof. Dr.**
**Rheinlanddamm 201 a**
**D-4600 Dortmund 1 (DE)**

(74) Vertreter: **Seiffert, Klaus et al**
**Patentanwälte Dr.D. Weber u. K. Seiffert Gustav-Freytag-Strasse 25 Postfach 6145**
**D-6200 Wiesbaden 1 (DE)**

Courier Press, Leamington Spa, England.

**Beschreibung**

Die Erfindung betrifft ein Fluorometer, bestehend aus einem Monochromator einem Strahler, einem Strahlungsempfaenger und einer Messkammer, in der das Messobjekt in Wirkverbindung mit einem, einen Fluoreszenzindikator enthaltenden Indikatorraum steht.

Das Messprinzip solcher Fluorometer besteht darin, dass eine Loeschung von Fluoreszenzstrahlung erfolgt, wenn Teilchen, physikalische oder chemische Parameter auf den die FLuorszenzstrahlung erzeugenden Indikator einwirken. Dadurch koennen Konzentrationsaenderungen oder Parameteraenderungen gemessen werden. Die charakterische Konstante bei solchen Messungen ist die Loeschungskonstante oder auch "Quenchkonstante" K, die die Messempfindlichkeit des Indikators fuer Konzentrations-oder Parameteraenderungen beschreibt.

Fluorometer mit diesen Merkmalen sind bisher weitgehend auf solchen Gebieten verwendet worden, bei denen verschiedene Messaufgaben mit der gleichen Vorrichtung geloest werden sollten. Dabei wurden jeweils die Messkammern oder die Indikatorraeume ausgewechselt, die Lichtmesseinrichtung blieb die gleiche.

Es gibt jedoch Messaufgaben, beispielsweise Serienmessungen im medizinischen und biologischen Bereich, bei denen eine hohe Spezialisierung der Messvorrichtung moeglich ist, sodass diese in ihren messtechnischen Eigenschaften besonders auf diese Messaufgabe angepasst werden kann.

Insbesondere bei transparenten, festen, fluessigen oder gasfoermigen Medien, die nur eine geringe Fluorszenzstreuung aufweisen, kann beispielsweise im Durchlicht gemessen werden. Durchlichtmessungen sind aus den US—PSn 3725658 und 3612866 oder aus der DE—OS 2416997 bereits bekannt, sie koennen als einfache oder auch als Referenzmessungen vorgenommen werden, wie es die DE—OS 3346024 oder die DD—AS 106085 zeigen. Die US—PS 3725658 schlaegt dabei auch GaAs-Strahler vor. Solche Strahler haben jedoch seither keine technische Bedeutung erlangt.

Fluorometer zur Messung im Durchlicht zu verbessern, vor allem zu robusten Messgeraeten herzurichten, hat sich die Erfindung deshalb zur Aufgabe gemacht.

Sie loest diese Aufgabe dadurch, dass dem Strahler in einem Abstand, der nur geringfuegig groesser ist als die Dicke der einen Indikatorraum (31, 33) enthaltenden Messkammer (3), ein als Halbleiter ausgebildeter Photoempfaenger (2) gegenuebersteht, und dass die Quenchkonstante des Indikators im Wellenlaengenbereich des Monochromators weniger als $7,5 \cdot 0$ exp$^{-6}$/Pa (10 exp$^{-3}$/Torr) betraegt.

Der Vorteil dieser Anordnung besteht darin, dass nunmehr vom Empfaenger der maximale Raumwinkel der Fluoreszenzstrahlung ausgenutzt werden kann, der nur noch durch die Schichtdicke des Messobjektes oder der Messkammer begrenzt ist.

Das durch die erfindungsgemaesse Anordnung wesentlich verbesserte Signal-Rauschverhaeltnis erlaubt es, nunmehr auch solche Indikatoren zu verwenden, die bisher wegen ihrer geringen Messempfindlichkeit ausgeschlossen werden mussten. Dadurch wird die Anzahl der verwendbaren Indikatoren vergroessert, sodass dadurch auch Indikatoren fuer bislang nicht messbare Teilchenarten oder physikalische Parameter verwendet werden koennen.

Beispielsweise koennen jetzt Indikatoren verwendet werden, die Quenchkonstanten ("K-Werte") von $7,5 \cdot 10$ exp$^{-6}$/Pa (10 exp$^{-3}$/Torr) bis $7,5 \cdot 10$ exp$^{-8}$/Pa (10 exp$^{-5}$/Torr) aufweisen, waehrend die bisher angewendeten Indikatoren K-Werte von $7,5 \cdot 10$ exp$^{-4}$/Pa (10 exp$^{-1}$/Torr) bis $7,5 \cdot 10$ exp$^{-6}$/Pa (10 exp$^{-3}$/Torr) haben mussten, um gut erkennbare Signale zu erzeugen.

Es koennen aber auch an sich empfindliche Indikatoren im laengerwelligen Bereich benutzt werden, wo sie weniger messempfindlich sind. Das eroeffnet die Moeglichkeit, auch laengerwellige Strahler, beispielsweise Leuchtdioden, und auch Halbleiterempfaenger zu verwenden. Solche Strahler oder Empfaenger, wie beispielsweise Leuchtdioden, Photodioden oder Phototransistoren, waren bislang wegen ihrer geringen Lichtintensitaet oder ihrer geringen Empfindlichkeit in diesen Bereichen nur mit Aufwand verwendbar.

Die Monochromatisierung kann dabei ohne weiteres durch Filter erfolgen. Filter verringern zwar die Signalintensitaeten. Dies wird jedoch durch den hohen Empfindlichkeitszuwachs aufgrund der erfindungsgemaessen Anordnung der Elemente ausgeglichen. Sind Abstimmungen der Wellenlaengenbereiche von Empfaenger und Strahler moeglich, koennen die Filter entfallen.

Gerade die Verwendung von Halbleiterelementen gestattet aber auch den Aufbau kleiner und robuster Vorrichtungen, die dann wegen des geringen Energieverbrauchs der Elemente ohne Schwierigkeiten transportabel ausgebildet werden koennen.

Auch die Langzeitstabilitaet der jetzt verwendbaren messunempfindlichen Indikatoren ist wesentlich hoeher als diejenige von messempfindlichen Indikatoren. Ebenso ist die Linearitaet messunempfindlicher Indikatoren wesentlich groesser als diejenige von messempfindlichen Indikatoren. Beides sind wesentliche messtechnische Vorteile.

Als weiterer Vorteil ist noch die Vergroesserung des Messbereiches bei der pH-Messung zu nennen. Bischer sind naemlich nur enge pH-Bereiche um den pK-Wert, -etwa 1,5 pH-Einheiten- messbar gewesen, weil die Intensitaet darueberhinaus zu stark abfaellt. Bei den jetzt moeglichen hohen Strahlungsintensitaeten hat dies keine wesentliche Bedeutung mehr und es kann auch in Bereichen gemessen werden, die weiter vom pK-Wert entfernt sind. Auch koennen jetzt gegenueber den bekannten Anordnungen geringere Schichtdicken des Messgutes zur Messung verwendet werden, was eine Verbesserung der Anspechzeit zur Folge hat.

In Weiterentwickung der Erfindung ist der Messabstand von Strahler und Empfaenger variabel. Dadurch ist eine Anpassung an verschieden dicke Messkammern ermoeglicht, sodass jeweils der kleinste Abstand zwischen Strahler und Empfaenger einstellbar ist.

Weiterhin kann die Dicke der Messkammer selbst variabel sein. Auch diese Ausbildung der Erfindung gestattet eine Optimierung der Strahlungsintensitaet.

Zweckmaessig wird der Indikatorraum an der Seite des Strahlungempfaengers angeordnet. Dadurch ist der vom Photoempfaenger erfasste Raumwinkel maximal. Die Verringerung des erfassten Raumwinkels auf der Strahlerseite laesst sich durch Intensitaetserhoehungen des Strahlers ausgleichen.

Eine weitere Verbesserung ergibt sich dadurch, dass der Messraum einen als K-Variator ausgebildeten Indikatorraum aufweist, der innerhalb des Messraums verschieblich ist.

Ein solcher K-Variator weist einen oertlich veraenderlichen K-Wert auf und durch seine Verschiebung innerhalb des Strahlenganges ist somit auch die Quenchkonstante K einstellbar und optimierbar.

In der Zeichnung, anhand derer die Erfindung weiter erlaeutert wird, zeigen:

Fig. 1 eine Anordnung nach der Erfindung
Fig. 2 eine Anordnung mit Referenzkammer
Fig. 3 die Strahlungscharakterisiken einer Leuchtdiode und eines Fluoreszenzindikators
Fig. 4 einen K-Variator.

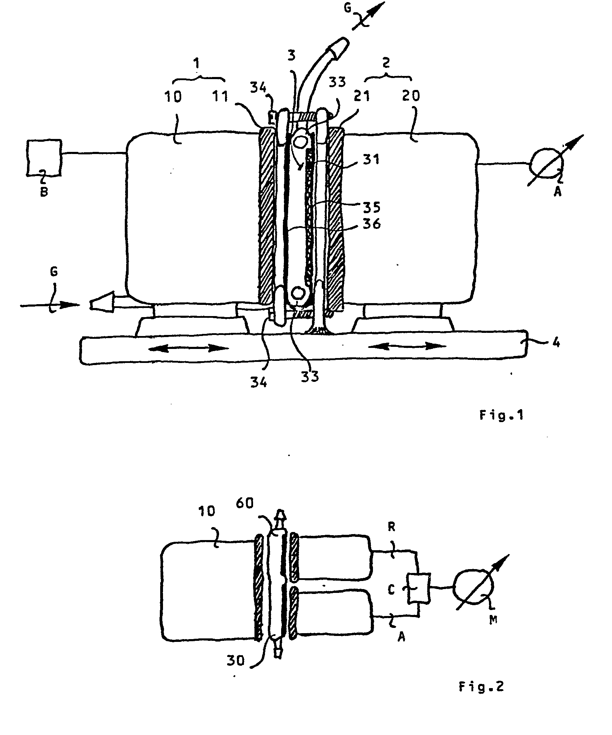

In Fig. 1 steht eine durch einen Filter 11 monochromatisierte Leichtdiode 10 als Strahler einem durch einen Filter 21 monochromatisierten Photoempfaenger 20 gegenueber. Das Signal der Anordnung wird auf einer Anzeige A angezeigt, die Anordnung wird durch eine Versorgung B elektrisch versorgt.

Zwischen dem aus Filter und Leuchtdiode gebildeten monochromatisierten Strahler 1 und dem aus Filter und Photoempfaenger gebildeten monochromatisierten Empfaenger 2 ist eine Messkammer 3 angeordnet, die entweder als Kuevette oder als Durchflusskammer, wie gezeichnet, ausgebildet sein kann.

Die Durchflusskammern koennen dabei mit grossen Querschnitten ausgebildet sein, sodass ein Gasstrom G ungehindert verlaufen kann, womit beispielsweise eine Atemgasanalyse durchfuehrbar ist. Das ist aufgrund der kleinen Zeitkonstanten des kompakten Fluorometers messtechnisch gut moeglich.

Bei entsprechender Ausbildung koennen aber auch transparente Fluessigkeiten vermessen werden.

Zur Ueberwachung des Messkammerdurchflusses kann ein Stroemungsmesser, zur Stabilisierung eine Thermostatisierung vorgesehen sein.

Der monochromasierte Strahler 1 oder der monochromasierte Empfaenger 2 koennen dabei einstellbar auf einer Basisplatte 4 befestigt sein, sodass beide Elemente so dicht wie moeglich der Messkammer 3 genaehert werden koennen. Zweckmaessig sind jeweils zwei dieser drei Elemente einstellbar.

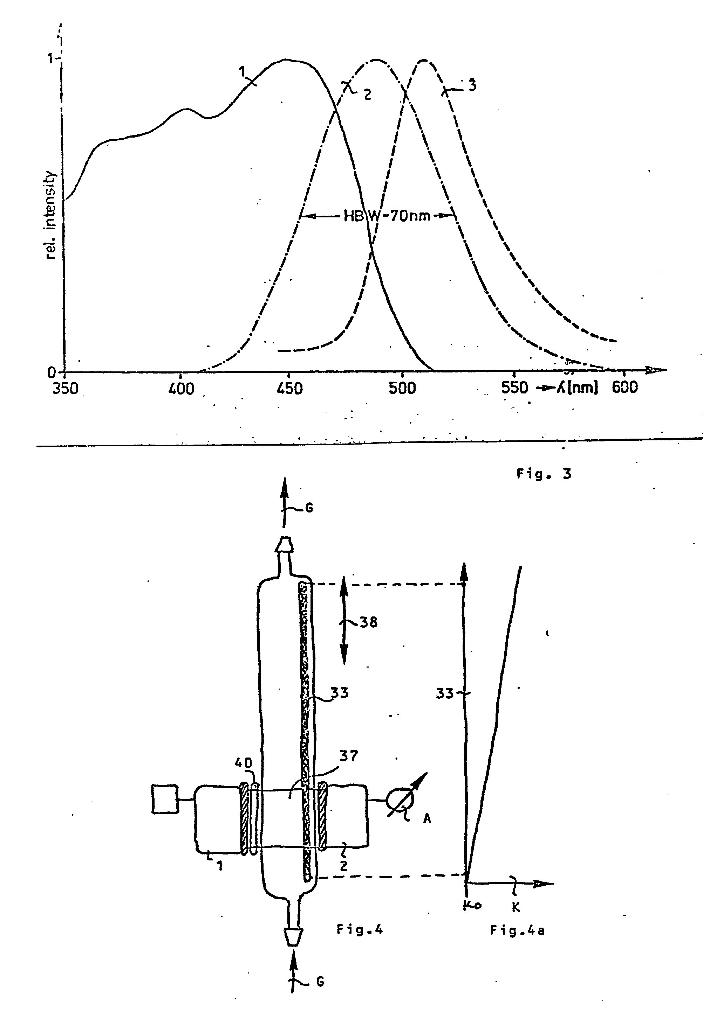

Als monochromatisierte Strahler und monochromatisierte Empfaenger finden, erfindungsgemäß Halbleiterelemente Verwendung, die elektrisch und mechanisch sehr robust sind. Ihr Nachteil, dass sie, wie Fig. 3 zeigt, eher im langwelligen Teil des Spektrums arbeiten, waehrend die meisten Indikatoren im kurzwelligen Teil des Spektrums arbeiten, wird durch die hohen Strahlungsintensitaeten der erfindungsgemaessen Anordnung ausgeglichen.

In der Messkammer 3 steht ein Indikatorraum 31, meist als OPTODE bezeichnet, mit dem Messobjekt G in Wirkverbindung. Die optischen Eigenschaften des im Indikatorraum angeordneten Indikators werden durch die Einwirkung des Messobjektes G in bekannter Weise veraendert und diese Veraenderung durch monochromatisierte Strahlungsempfaenger 2 gemessen.

Die Strahlungsintensitaet der Fluoreszenzstrahlung kann dadurch erhoeht werden, dass die Seitenwaende 33 der Messkammer 3 elastisch sind, sodass dadurch die Messkammer 3 mittels Verstellmitteln 34 jeweils auf maximales Signal, also auf eine optimale Dicke einstellbar ist.

Weiterhin koennen die Fenster 35, 36 der Messkammer anstelle der Filter 11, 21 als optische Filter ausgebildet sein, oder aber der im Indikatorraum 31 angeordnete Indikator weist eine derartige Konzentration auf, dass die Anregungsstrahlung im Indikatorraum vollstaendig absorbiert wird. In beiden Faellen koennen die Abstaende zwischen Strahler 10 und Empfaenger 20 -die dann nicht mehr monochromatisiert werden muessen- weiter verringert und damit die Intensitaet der Messtrahlung weiter erhoeht werden. Auch sollten die Mittel zur Halterung der Messkammer, die im gezeichneten Beispiel nur schematisch dargestellt sind, moeglichst duenn oder derart ausgebildet sein, dass sie die Einstellung des geringsten Abstandes nicht behindern.

Wenn die Messkammer, beispielsweise bei der Atemgasanalyse, eine bestimmte Dicke nicht unterschreiten darf, koennen optische Mittel 40, Fig. 4, zur Fokussierung der Strahlung in die Messkammer, beispielsweise Fresnelplatten oder Linsen, verwendet werden.

Als Strahler 10 werden Leuchtdioden verwendet. Diese haben zwar nach Fig. 3 nur eine sehr geringe Ueberlappung mit den verwendbaren Indikatoren. Die Anregungungstrahlung des Indikators, Kurve 1, die Fluoreszenzstrahlung der Indikators, Kurve 3 und die Emission der Leuchtdiode 2 treffen nur im Bereich um 470 nm und mit geringen Intensitaeten zusammen. Die geringen Intensitaet werden jedoch durch den hohen Signalgewinn der Anordnung ausgeglichen.

Zusaetzlich kann nach Fig. 2 auf der Messtrecke parallel zur Messkammer 30 eine Referenzkammer 60 angeordnet sein. In bekannter Weise kann dadurch ein von den absoluten Schwankungen der Strahlungsintensitaet unabhaengiges Messignal M, beispielsweise durch Quotientenbildung in einem Rechner C aus dem Referenzsignal R der Referenzkammer 60 und dem Messignal A der Messkammer 30, erzeugt werdèn. Die Referenzkammer 60 kann dabei unter Standardbedingungen betrieben werden oder sie wird ebenfalls vom Messgut G durchstroemt, wie im gezeichneten Beispiel. Dann muss der Indikator der Referenzkammer jedoch so gewaehlt werden, dass er vom Messgut nicht beeinflusst wird.

Weiterhin kann der Indikatorraum mit raeumlich veraenderlichen K-Werten gemaess Fig. 4a gebildet und gemaess Fig. 4 im Strahlengang 37 verschieblich sein. Hierbei wird der Indikatorraum 33 in Richtung 38 verschoben, bis der jeweils richtige K-Wert des Indikatorraums im Strahlengang 37 liegt. Der richtige K-Wert ist dann eingestellt, wenn das Signalrauschen der Anzeigeanordnung A einen Minimalwert erreicht hat.

Zum Verstaendnis dieser K-Wertverschiebung sei angefuegt, dass die Fluoreszenzloeschung nach STERN-VOLLMER gemaess der Gleichung/ unformat

$$(1) \qquad I(Cp) = \frac{I_o}{1+KP}$$

$I_o$=Fluoreszenz ohne Parametereinfluss, $I(P)$=Fluoreszenz nach Einfluss durch den Parameter, K=Quenchkonstante, P=Konzentration/ Wert des Parameters verlaeuft und damit die Messempfindlichkeit $S(P)$ der Funktion

$$(2) \qquad S(P) = \frac{dI}{dP} = \frac{K \cdot I_o}{(1+KP)^2}$$

folgt.

Die die Messempfindlichkeit repraesentierenden Funktionen $S(P)$ schneiden sich fuer verschiedene Werte der "Quenchkonstante" K im Bereich groesserer Messwerte. Dadurch kann durch Einstellung des K-Wertes, der beispielsweise durch den stofflichen Aufbau des Indikatorraumes beinflussbar ist, der Rauschanteil des Signals beim jeweiligen Messwert minimiert werden.

Aus der Funktion (1) folgt fuer gering empfindliche Indikatoren die lineare Form der Messempfindlichkeit:

$$(3) \qquad I(P) = (1 - K \cdot P)I_o$$

**Patentansprüche**

1. Flourometer, bestehend aus einem als Leuchtdiode ausgebildeten Strahler (10), einem Strahlungsempfaenger (20) und einer Messkammer (3), in der das Messobjekt (G) in Wirkverbindung mit einem einen Fluoreszenzindikator enthaltenden Indikatorraum (31) steht, dadurch gekennzeichnet, daß durch zwischenschaltung von Monochromatoren (11, 21) oder Abstimmung von Sender (10) und Empfänger (20) monochromatisches Licht ausgesendet und Empfangen wird, dass dem Strahler in einem Abstand, der nur gerinfuegig groesser ist als die Dicke der einen Indikatorraum (31, 33) enthaltenden Messkammer (3), ein als Halbleiter ausgebildeter Photoempfaenger (2) gegenuebersteht, und dass die Quenchkonstante des Indikators im Wellenlaengenbereich des Monochromators weniger als $7,5 \cdot 10 \exp^{-6}$/Pa (10 exp$^{-3}$/Torr) betraegt.

2. Anordnung nach Anspruch 1, dadurch gekennzeichnet, dass der Messabstand zwischen Strahler (1), Messkammer (3) und Empfaenger (2) variabel einstellbar und zur Messung auf ein Minimum eingestellt ist.

3. Anordnung nach einem der Ansprueche 1 bis 5, dadurch gekennzeichnet, dass die Dicke der Messkammer (3) variabel ist.

4. Anordnung nach einem oder mehreren der Ansprueche 1 bis 3, dadurch gekennzeichnet, dass die Indikatoren des Indikatorraumes (31) eine solche Konzentration aufweisen, dass die Strahlung des monochromasierten Strahlers 1 vor Erreichen des Photoempfaengers (20) absorbiert ist.

5. Anordnung nach einem der Ansprueche 1 bis 4, dadurch gekennzeichnet, dass die Messkammer (3) einen als K-Variator ausgebildeten Indikatorraum aufweist, der innerhalb des Strahlenganges (37) in der Messkammer (3) verschieblich ist.

6. Anordnung nach einer oder mehreren der Ansprueche 1 bis 5, dadurch gekennzeichnet, dass Mittel zur Fokussierung (40) der Strahlung im Stahlengang (37) vorgesehen sind.

**Revendications**

1. Fluorimètre, constitué par un émetteur de rayonnement (10) réalisé sous forme de diode luminescente, un récepteur de rayonnement (20) et une chambre de mesure (3), dans laquelle l'objet (G) à analyser est in liaison active avec un espace indicateur (31) contenant un indicateur de fluorescence, caractérisé par le fait que, par intercalage de monochromateurs (11, 21) ou par accord de l'émetteur (10) et du récepteur (20), de la lumière monochromatique est émise en reçue, qu'un photorécepteur (2) réalisé sous forme de semi-conducteur fait face à l'émetteur de rayonnement à une distance qui n'est que légérement supérieure à l'épaisseur de la chambre de mesure (3) contenant un espace indicateur (31, 33), et que la constante d'extinction de l'indicateur dans la plage de longueurs d'onde du monochromateur est inférieure à 7,5 (10 exp$^{-3}$/ Torr).

2. Dispositif selon la revendication 1, caractérisé par le fait que la distance de mesure entre l'emetteur de rayonnement (1), la chambre de mesure (3) et le récepteur (2) peut être réglée de manière variable et est réglée à un minimum pour la mesure.

3. Dispositif selon l'une des revendications 1 à 2, caractérisé par le fait que l'épaisseur de la chambre de mesure (3) est variable.

4. Dispositif selon l'une ou plusieurs des revendications 1 à 3, caractérisé par le fait que les indicateurs de l'espace indicateur (31) présentent une concentration telle que le rayonnement de l'émetteur (1) rendu monochromatique est absorbé avant d'atteindre le photorécepteur (20).

5. Dispositif selon l'une ou plusieurs des revendications 1 à 4, caractérisé par le fait que la chambre de mesure (3) présente un espace indicateur qui est réalisé sous forme de variateur de K et peut être déplacé à l'intérieur de la zone de passage des rayons (37) dans la chambre de mesure (3).

6. Dispositif selon l'une ou plusieurs des revendications 1 à 5, caractérisé par le fait que sont prévus des moyens de focalisation (40) du rayonnement dans la zone de passage des rayons (37).

**Claims**

1. A fluorometer comprising a light emitter (10) constituted by a light-emitting diode, a light emission receiver (20) and a measuring chamber (3) in which the object to be measured (G) is located in active connection with an indicator chamber (31) containing a fluorescence indicator, characterised in that monochromatic light is transmitted and received by the insertion of monochromators (11, 21) or by modulation of the emitter (10) and the receiver (20), that a photoreceiver constituted by a semiconductor is located opposite the light emitter at a distance which is only slightly greater than the thickness of the measuring chamber (3) containing the indicator chamber (31, 33), and that the quenching constant of the indicator in the wavelength region of the monochromator is less than $7.5 \cdot 10 \exp{-6}$/Pa ($10 \exp^{-3}$/Torr).

2. An arrangement according to claim 1, characterised in that the measuring distance between the light emitter (1), the measuring chamber (3) and the receiver (2) is variably adjustable and set to a minimum for measurement.

3. An arrangement according to any one of claims 1 to 5, characterised in that the thickness of the measuring chamber (3) is variable.

4. An arrangement according to one or more of claims 1 to 3, characterised in that the indicators of the indicator chamber (31) have a concentration such that the light emission of the monochromatic light emitter 1 is absorbed before reaching the photoreceiver.

5. An arrangement according to any one of claims 1 to 4, characterised in that the measuring chamber (3) has an indicator chamber formed as a K-variator which is movable in the light emission path (37) in the measuring chamber (3).

6. An arrangement according to one or more of claims 1 to 5, characterised in that means for focussing (40) the light emission are provided in the light emission path (37).

Fig.1

Fig.2

Fig. 3

Fig. 4    Fig. 4a